# EUROPEAN PATENT SPECIFICATION

(11) **EP 1 515 454 B1**
(45) Date of publication and mention of the grant of the patent: **14.09.2011**
(21) Application number: 04077778.1
(22) Date of filing: 12.10.2000
(51) Int. Cl.: H04B 1/707, H04B 7/26

(54) **Synchronisation signal transmission method and system for CDMA mobile communication**
Synchronisationssignal-Übertragungsverfahren und System für CDMA-Mobilkommunikation
Procédé de transmission de signal de synchronisation et système pour communication mobile à AMRC

(30) Priority: 14.10.1999 JP 29300599
(43) Date of publication of application: 16.03.2005
(62) Divisional of application: 00308977.8
(73) Proprietor: NTT DOCOMO, INC., Chiyoda-ku Tokyo 100-6150 (JP)
(72) Inventor: Iwamura, Mikio c/o NTT DoCoMo, Inc., Tokyo 100-6150 (JP); Ishikawa, Yoshihiro, Yokosuka-shi, Kanagawa 239-0841 (JP)
(74) Representative: Zangs, Rainer E.

(56) References cited:
- EP-A- 0 794 682
- EP-A- 0 795 971
- ARIB: "Specifications of Air-Interface for 3G Mobile System ver. 1.0"[Online] vol. 3, 14 January 1999 (1999-01-14), pages 1-157, XP002313819 Retrieved from the Internet: URL:http://www.arib.or.jp/IMT-2000/ARIB/Do cument/vol3_m10.zip> [retrieved on 2005-01-17]
- HIGUCHI K ET AL: "FAST CELL SEARCH ALGORITHM IN INTER-CELL ASYNCHRONOUS DS-CDMA MOBILE RADIO" IEICE TRANSACTIONS ON COMMUNICATIONS, INSTITUTE OF ELECTRONICS INFORMATION AND COMM. ENG. TOKYO, JP, vol. E81-B, no. 7, July 1998 (1998-07), pages 1527-1534, XP000789826 ISSN: 0916-8516

## Description

The present invention relates to a sync signal transmission method in a CDMA (Code Division Multiple Access) mobile communications system, a CDMA mobile communications system and a base station.

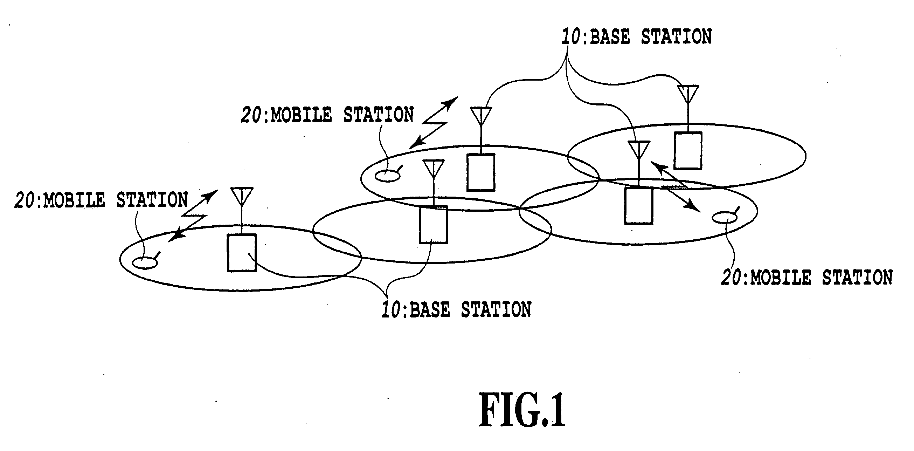

A mobile communication system like a widespread mobile phone system offers its services by dividing the entire service area into rather small radio zones called cells. As shown in Fig. 1, such a system comprises a plurality of base stations 10 to cover the divided radio zones (cells), and mobile stations 20 to communicate with the base stations by establishing radio channels.

The radio signal transmitted from a base station 10 at certain transmission power travels through space with a certain attenuation, and arrives at a receiving site. The attenuation the radio signal undergoes, increases with the distance between the transmitting and the receiving sites. Hence, it is common that a perch channel transmitted from a distant base station 10 is received at a lower received level, and a perch channel transmitted from a near base station 10 is received at a higher received level. In practice, however, the propagation loss is not determined only by the distance, but varies depending on such conditions as the geography and buildings. As a result, the received power of the perch channels from the base stations 10 fluctuate sharply as the mobile stations 20 move. In the condition in which the received levels of the perch channels from the base stations 10 fluctuate always, perches above a required received level alters incessantly such that the received level of the current perch drops suddenly, or the received level of a perch unreceivable increases abruptly above the receivable level. Thus, to receive the signals from the base stations 10 with better quality, it is important for the mobile stations 20 to continuously monitor the perches from the base stations 10, and to select the best base station 10.

Direct Sequence CDMA (DS-CDMA) is a scheme for multiple users to carry out communications using the same radio frequency band. This is established by spreading the spectrum of the data modulated signal of each user with a spreading code. The radio signal of each user is identified by a spreading code assigned to the user.

Each spreading code, used for spreading signals in the DS-CDMA mobile communications system, is a combination of a short period spreading code and a long period spreading code. The short period spreading codes have the same repetition period identical to the length of one information symbol, and are used commonly by all the base stations. In contrast, the long period spreading codes have a repetition period longer than the length of the information symbol, and vary from base station to base station.

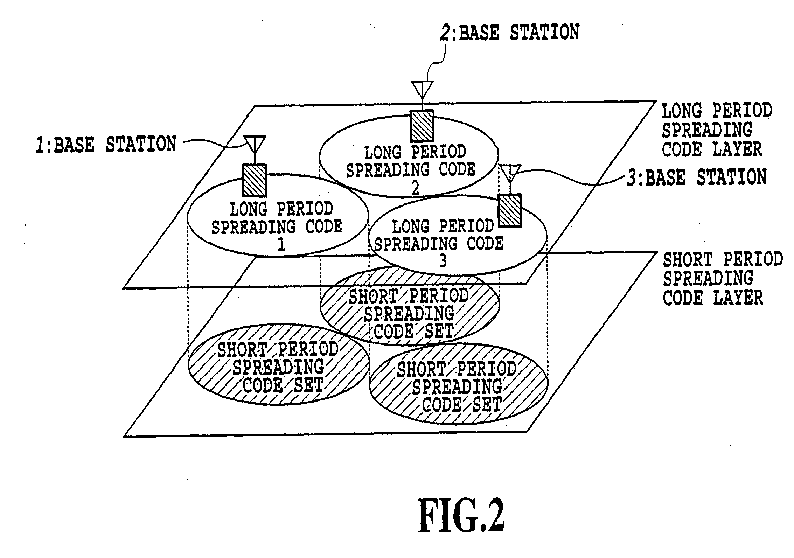

Fig. 2 is a schematic diagram illustrating the spreading codes usage in the DS-CDMA mobile communications system.

In Fig. 2, the upper layer represents the long period spreading codes assigned to the base stations, and the lower layer represents the short period spreading codes commonly used by all base stations. Signals transmitted from each base station are identified by the long period spreading code uniquely assigned to the base station.

Fig. 3 is a schematic diagram illustrating an example of timing relationships among the long period spreading codes a mobile station receives from a plurality of base stations.

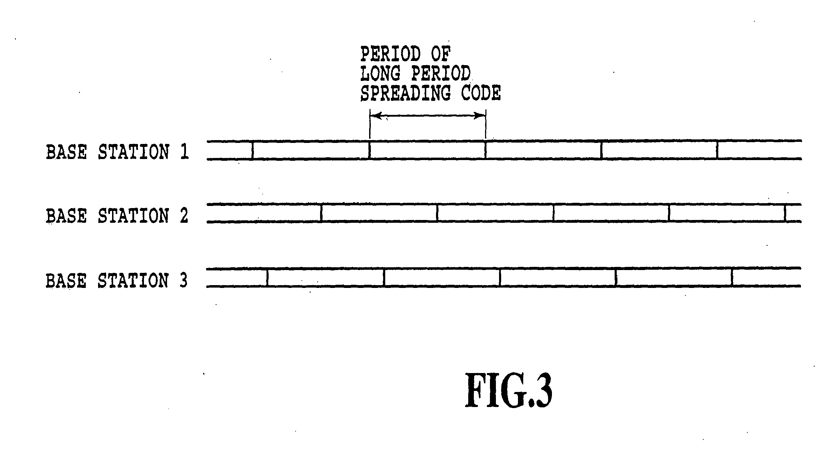

Fig. 3 supposes an asynchronous mobile communications system requiring no synchronization among the base stations. Hence, the timing of the long period spreading codes received by the mobile station takes place at random for the individual base stations.

Therefore, in an asynchronous mobile communication system, mobile stations must search for a perch quickly whose spreading code and phase are unknown. A fast method to acquire a spreading code and its arbitrary phase is described in a document by K. Higuchi, M. Sawahashi and F. Adachi, "Fast Cell Search Algorithm In Inter-Cell Asynchronous DS-CDMA Mobile Radio" , IEICE Trans. Commun. , Vol. E81-B, No. 7, July 1998. The method provides a "masking symbol" to parts of the perch channel which undergoes double spreading by the short period spreading code and long period spreading code. Here, the "masking symbol" is spread only by the short period spreading code without using the long period spreading code.

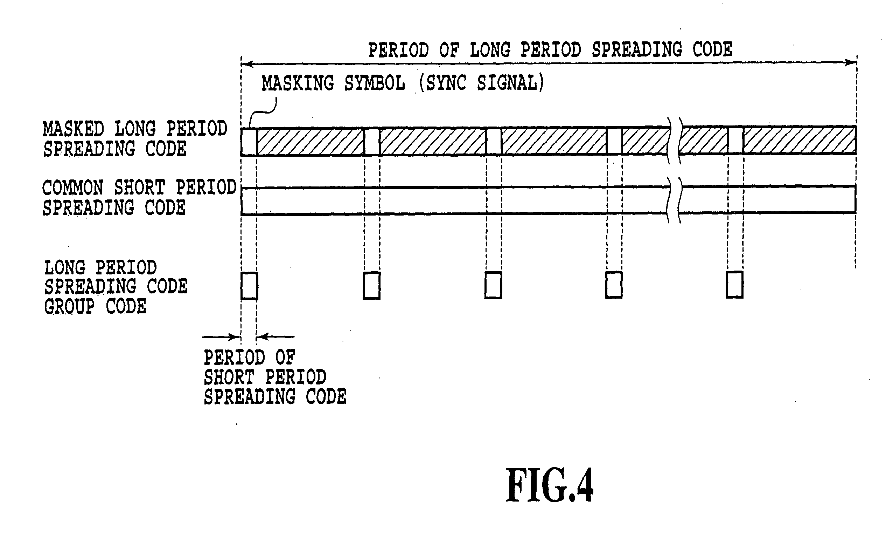

Fig. 4 is a schematic diagram illustrating a structure of a perch channel.

First, the mobile station despreads the received signal using a short period spreading code commonly used by all the base stations. This enables the mobile station to detect a peak at the timing of a masking symbol of the received signal independently of the types of the long period spreading code (first step).

Subsequently, at the timing extracted in the first step, the mobile station detects a long period spreading code group code superimposed on the masking symbol, and identifies the group to which the long period spreading code assigned to the intended base station belongs (second step).

Finally, considering the long period spreading code belonging to the group determined in the second step as the set of candidates, the mobile station identifies the long period spreading code used by the base station (third step).

In a system to which this method is applied, long period spreading codes are divided into groups in advance.

As described above, the mobile communications system comprises a lot of base stations, and each cell consists of sectors covered by directional antennas. Accordingly, the mobile stations must receive signals sent from a great number of sectors. In addition, the signals transmitted from the sectors are reflected off surrounding buildings and divided into many paths before arriving at the mobile stations. Consequently, the signals from the sectors include many delayed waves.

As a result, with respect to the great number of the signals, the mobile stations must identify the long period spreading code and establish timing synchronization in such a condition as the codes or timings are unknown. This presents an important problem of increasing the load on the mobile stations in carrying out the neighboring cell search or base station selection, thereby impairing selection accuracy of the base stations.

"Specifications of Air-Interface for 3G Mobile System", Volume 3, Version 1-.0, Association of Radio Industries and Businesses 14.01.1999, discloses a CDMA system in which double spreading of information signals is carried out using a short period of spreading code and a long period of spreading code. The short period of spreading code has a repetition period same as the information symbol rate and is common amongst the base stations in a system. The timing of the sync signal for each sector is different to the other sectors.

EP-A-0,795,971 discloses a sync signal transmission method in a spread spectrum communication system in which double spreading of information symbols is carried out using a short period spreading code and a long period spreading code, the sync signals being spread by one of the short period spreading codes.

The present invention is implemented to solve the foregoing problem. It is therefore an object of the present invention to provide a technique capable of reducing the load on a mobile station to identify the long period spreading code and to establish the timing synchronization, and capable of increasing the selection accuracy of the base station.

In a first aspect of the present invention, there is provided a sync signal transmission method in a CDMA mobile communications system as claimed in claim 1.

In a second aspect of the present invention, there is provided a CDMA mobile communications system as claimed in claim 3.

In a third aspect of the present invention, there is provided a base station in a CDMA mobile communications system for communicating with a mobile station, the base station as claimed in claim 5.

The above and other objects, features and advantages of the present invention will become more apparent from the following description of embodiments thereof taken in conjunction with the accompanying drawings.
Fig. 1 is a diagram illustrating a configuration of a CDMA mobile communications system;
Fig. 2 is a schematic diagram illustrating a method of using spreading codes in a DS-CDMA mobile communications system;
Fig. 3 is a schematic diagram illustrating timings of long period spreading codes in signals sent from base stations to be received by a mobile station;
Fig. 4 is a schematic diagram illustrating a structure of a perch channel;

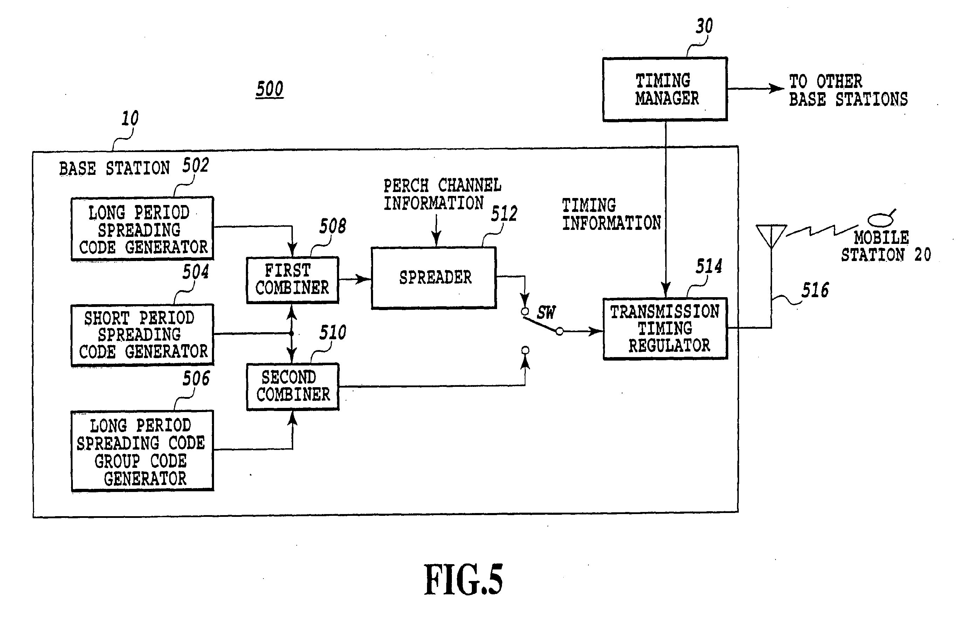

Fig. 5 is a block diagram showing a configuration of an embodiment of a mobile communications system in accordance with the present invention;

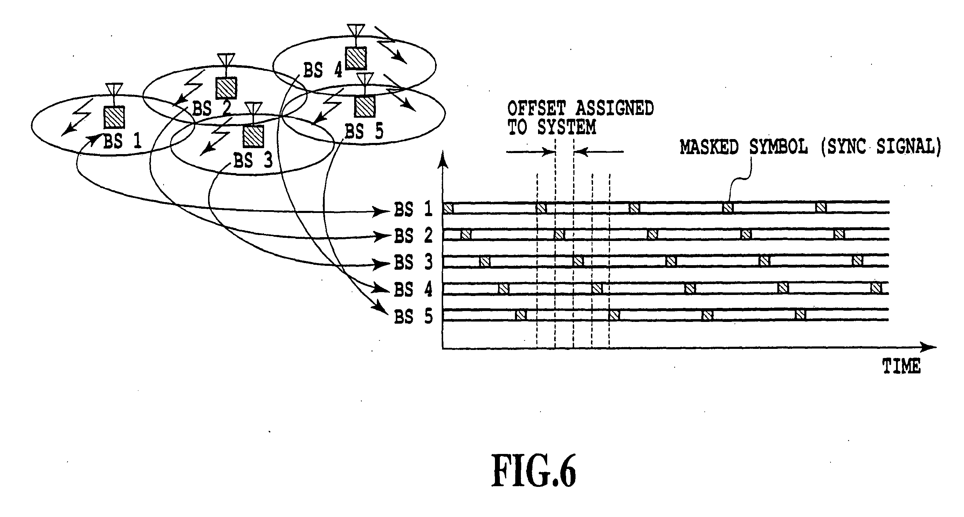

Fig. 6 is a schematic diagram illustrating an operation of the mobile communications system in accordance with the present invention;

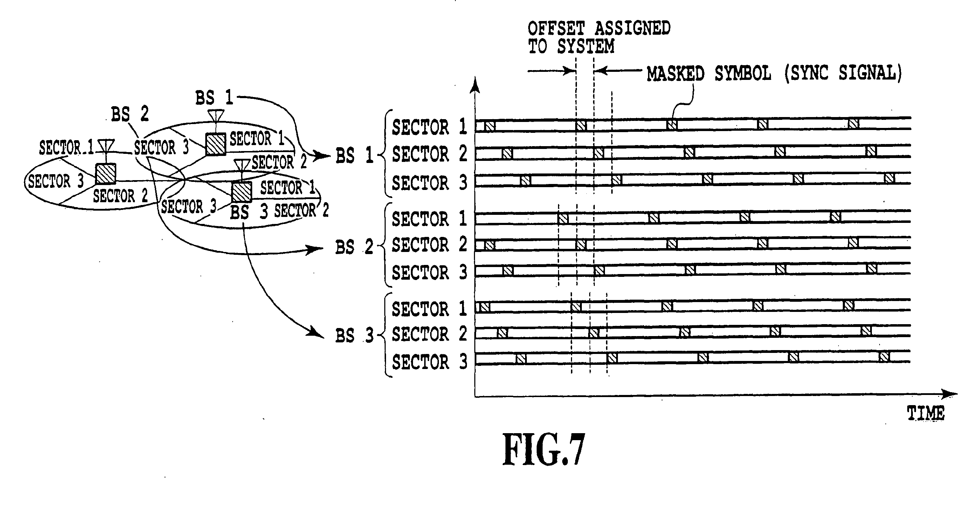

Fig. 7 is a schematic diagram illustrating another operation of the mobile communications system in accordance with the present invention; and

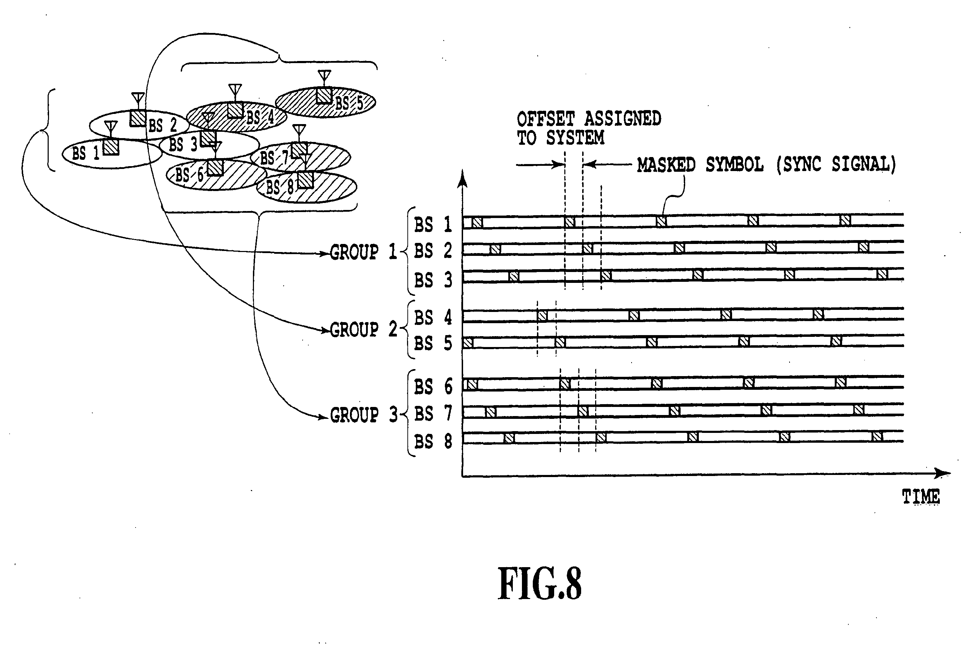

Fig. 8 is a schematic diagram illustrating still another operation of the mobile communications system in accordance with the present invention.

The invention will now be described with reference to the accompanying drawings.

### EMBODIMENT 1

Fig. 5 is a block diagram showing a configuration of a mobile communications system in accordance with the present invention, which shows only portions of the mobile communications system relevant to the present invention.

The mobile communications system 500 comprises at least a base station 10, a mobile station 20, and a timing manager 30.

The base station 10, which is connected to the timing manager 30 to receive timing information therefrom, carries out radio communications with the mobile station 20. The base station 10 comprises at least a long period spreading code generator 502, a short period spreading code generator 504, a long period spreading code group code generator 506, a first combiner 508, a second combiner 510, a spreader 512, a transmission timing regulator 514, and an antenna 516. The long period spreading code generator 502, which is connected to the first combiner 508, generates the long period spreading code that is uniquely assigned to the base station and has a repetition period longer than the period of an information symbol, to be used for the spreading in the mobile communications system. The short period spreading code generator 504, which is connected to both the first combiner 508 and second combiner 510, generates short period spreading codes that are common to all the base stations and have the same repetition period as the information symbol, to be used for the spreading in the mobile communications system. The long period spreading code group code generator 506, which is connected to the second combiner 510, generates a group code of the long period spreading code. The first combiner 508, which is connected to the long period spreading code generator 502, short period spreading code generator 504 and spreader 512, combines the spreading codes generated by the long period spreading code generator 502 and short period spreading code generator 504, and supplies its output to the spreader 512. The second combiner 510, which is connected to the short period spreading code generator 504, long period spreading code group code generator 506 and switch SW, combines the short period spreading code generated by the short period spreading code generator 504 with the long period spreading code group code generated by the long period spreading code group code generator 506, and supplies its output to the switch SW. The spreader 512, which is connected to the first combiner 508 and switch SW, spreads perch channel information using the spreading code combined by the first combiner 508, and supplies its output to the switch SW. The switch SW normally connects the spreader 512 to the transmission timing regulator 514, but the second combiner 510 to the transmission timing regulator 514 at timings of the masking symbol, that is, the sync signal transmitted at every fixed interval from the second combiner 510. The transmission timing regulator 514, which is connected to the switch SW, antenna 516 and timing manager 30 through a communication channel, receives the timing information from the timing manager 30, and regulates the transmission timing of the signal from the spreader 512 or second combiner 510 to be transmitted to the mobile station 20 through the antenna 516. The antenna 516 connected to the transmission timing regulator 514 carries out radio communications with the mobile station 20. The timing manager 30 is connected to a plurality of base stations 10 to transfer the timing information to each base station. The mobile station 20 carries out the radio communications with the base station.

Next, an operation of the present embodiment of the mobile communications system 500 with the foregoing configuration will be described in detail with reference to Figs. 6-8.

Fig. 6 is a schematic diagram illustrating an operation of the mobile communications system in accordance with the present invention.

In Fig. 6, base stations BS1-BS5 each transmit a sync signal (masking symbol) regularly which is not spread by the long period spreading code. The base stations BS1-BS5 transmit these sync signals with shifted timing relationship among one another as depicted at bottom right of Fig. 6. The amount of shifting is fixed to the predetermined interval of the system and is known to the mobile stations in advance. Accordingly, the mobile station can acquire a plurality of sync signals efficiently in the neighboring cell search or in the base station selection by searching for sync signals from other base stations, focusing on the timings shifted by the fixed intervals from the timing of the sync signal reception, which is sent from the base station that has already been acquired by the mobile station.

Fig. 7 is a schematic diagram illustrating another operation of the mobile communications system in accordance with the present invention.

Cells including base stations BS1-BS3 are each divided into three sectors 1-3, each of which transmits a sync signal. The sync signals are transmitted with a fixed amount of timing offset, as illustrated on the right-hand side of Fig. 7. As illustrated in Fig. 7, the transmission timings of the sync signals are each shifted by the fixed interval between the sectors under the same base station so that the sync signals are sent with an offset assigned to the system.

Fig. 8 is a schematic diagram illustrating still another operation of the mobile communications system in accordance with the present invention.

In Fig. 8, the long period spreading codes used by the base stations are divided into groups such that the base stations BS1-BS3 use the long period spreading codes belonging to group 1, BS4 and BS5 use those belonging to group 2 and BS6-BS8 those belonging to group 3. The transmission timings of the sync signals sent from the base stations in the same group are each shifted by a fixed interval as illustrated in the bottom right of Fig. 8.

Incidentally, to apply the present invention to a plurality of base stations at different locations, it is necessary to install an external timing source to align timing axes among the base stations. To achieve this, the foregoing embodiment employs the timing manager 30. The present invention, however, is not limited to it. For example, it can use the GPS or a wired network as the timing source, offering a similar effect.

According to the present invention as described above, since the base stations each shift their sync signal transmission timings by the predetermined time periods, the mobile station can narrow the receiving timings of the sync signals, offering an advantage of being able to reduce the load on the mobile station involved in the neighboring cell search or the base station selection. Since the mobile station knows in advance that it can receive the sync signals from the base stations at the timings shifted by the predetermined fixed intervals, it can carry out the neighboring cell search focusing on the desired timing of the sync signal from the intended base station, thereby improving the efficiency of the neighboring cell search.

Furthermore, in the mobile communications system according to the present invention which divides the long period spreading codes into groups in advance, the base stations using the long period spreading codes in the same group each transmit their sync signals shifting the transmission timings by the predetermined interval. This enables the mobile station to limit the group of the long period spreading codes and the receiving timing of the sync signal, thereby reducing the load on the mobile station in the neighboring cell search or base station selection.

## Claims

1. A sync signal transmission method in a CDMA mobile communications system including at least a plurality of base stations (BS1-BS3) and a mobile station (20), said sync signal transmission method being **characterized by** comprising the steps of:
carrying out double spreading of information symbols using a short period spreading code and a long period spreading code, wherein the short period spreading code has a repetition period identical to a period of the information symbols and is assigned in common to all the base stations (BS1-BS3), and the long period spreading code has a repetition period longer than the information symbols and is differently assigned to each of said base stations (BS1-BS3);
transmitting the doubly spread information symbols to said mobile station (20); and
**characterized by** the step of
intermittently transmitting a sync signal, which is spread by only the short period spreading code, from said plurality of base stations (BS1-BS3) to said mobile station (20) with transmission timings shifted among one another by an amount that is fixed to a predetermined interval of the system and is known to the mobile station in advance.

2. The sync signal transmission method as claimed in claim 1, wherein at least the interval between the transmission timing of said sync signal in a first sector (SECTOR 1) of a cell and the transmission timing of said sync signal in a second sector (SECTOR 2) of the cell is the same as the interval between the transmission timing of said sync signal in the second sector (SECTOR 2) of the cell and the transmission timing of said sync signal in a third sector (SECTOR 3) of the cell.

3. A CDMA mobile communications system including at least a plurality of base stations (BS1-BS3) and a mobile station (20), said CDMA mobile communications system being **characterized by** comprising:
means for carrying out double spreading of information symbols using a short period spreading code and a long period spreading code, wherein the short period spreading code has a repetition period identical to a period of the information symbols and is assigned in common to all the base stations (BS1-BS3), and the long period spreading code has a repetition period longer than the information symbols and is differently assigned to each of said base stations (BS1-BS3);
means for transmitting the doubly spread information symbols to said mobile station (20); and
**characterized by**
means for intermittently transmitting a sync signal, which is spread by only the short period spreading code, from said plurality of base stations (BS1-BS3) to said mobile station (20) with transmission timings shifted among one another by an amount that is fixed to a predetermined interval of the system and is known to the mobile station in advance.

4. The CDMA mobile communications system as claimed in claim 3, wherein at least the interval between a transmission timing of said sync signal in a first sector (SECTOR 1) of a cell and the transmission timing of said sync signal in a second sector (SECTOR 2) of the cell is the same as the interval between the transmission timing of said sync signal in the second sector (SECTOR 2) of the cell and the transmission timing of said sync signal in a third sector (SECTOR 3) of the cell.

5. A base station (BS1, BS2, BS3) in a CDMA mobile communications system for communicating with a mobile station (20), said base station (BS1, BS2, BS3) being **characterized by** comprising:
means for carrying out double spreading of information symbols using a short period spreading code and a long period spreading code, wherein the short period spreading code has a repetition period identical to a period of the information symbols and is assigned in common to all the base stations (BS1-BS3), and the long period spreading code has a repetition period longer than the information symbols and is differently assigned to each of said base stations (BS1-BS3);
means for transmitting the doubly spread information symbols to said mobile station (20); and
**characterized by**
means for intermittently transmitting a sync signal, which is spread by only the short period spreading code, from said base station (BS1, BS2, BS3) to said mobile station (20) with transmission timings shifted among one another by an amount that is fixed to a predetermined interval of the system and is known to the mobile station in advance.

6. The base station as claimed in claim 5, wherein at least the interval between the transmission timing of said sync signal in a first sector (SECTOR 1) of a cell and the transmission timing of said sync signal in a second sector (SECTOR 2) of the cell is the same as the interval between the transmission timing of said sync signal in the second sector (SECTOR 2) of the cell and the transmission timing of said sync signal in a third sector (SECTOR 3) of the cell.

## Patentansprüche

1. Synchronisierungssignal-Übertragungsverfahren in einem CDMA-Mobilkommunikationssystem, das mindestens eine Vielzahl von Basisstationen (BS1-BS3) und eine Mobilstation (20) beinhaltet, wobei das Synchronisierungssignal-Übertragungsverfahren **gekennzeichnet ist durch** Umfassen der folgenden Schritte:
Ausführen von Doppelspreizung von Informationssymbolen unter Verwendung eines Kurzperiodenspreizcodes und eines Langperiodenspreizcodes, wobei der Kurzperiodenspreizcode eine Wiederholungsperiode identisch zu einer Periode der Informationssymbole aufweist, und gemeinsam zu all den Basisstationen (BS1-BS3) zugewiesen ist, und der Langperiodenspreizcode eine Wiederholungsperiode länger als die Informationssymbole aufweist und verschieden zu jeder der Basisstationen (BS1-BS3) zugewiesen ist;
Übertragen der doppelt gespreizten Informationssymbole zu der Mobilstation (20); und
**gekennzeichnet durch** den Schritt
intermittierend Übertragen eines Synchronisierungssignals, welches nur **durch** den Kurzperiodenspreizcode gespreizt ist, von der Vielzahl von Basisstationen (BS1-BS3) zu der Mobilstation (20) mit Übertragungstimings, die untereinander verschoben sind um einen Wert, der auf ein vorbestimmtes Intervall des Systems festgesetzt ist und der Mobilstation im Voraus bekannt ist.

2. Synchronisierungssignal-Übertragungsverfahren nach Anspruch 1, wobei mindestens das Intervall zwischen dem Übertragungstiming des Synchronisierungssignals in einem ersten Sektor (SECTOR 1) einer Zelle und dem Übertragungstiming des Synchronisierungssignals in einem zweiten Sektor (SECTOR 2) der Zelle das Gleiche ist wie das Intervall zwischen dem Übertragungstiming des Synchronisierungssignals in dem zweiten Sektor (SECTOR 2) der Zelle und dem Übertragungstiming des Synchronisierungssignals in einem dritten Sektor (SECTOR 3) der Zelle.

3. CDMA-Kommunikationssystem, welches mindestens eine Vielzahl von Basisstationen (BS1-BS3) und eine Mobilstation (20) beinhaltet, wobei das CDMA-Kommunikationssystem **gekennzeichnet ist durch** Umfassen:
Mittel zum Ausführen von Doppelspreizung von Informationssymbolen unter Verwendung eines Kurzperiodenspreizcodes und eines Langperiodenspreizcodes, wobei der Kurzperiodenspreizcode eine Wiederholungsperiode identisch zu einer Periode der Informationssymbole aufweist und gemeinsam zu all den Basisstationen (BS1-BS3) zugewiesen ist, und der Langperiodenspreizcode eine Wiederholungsperiode länger als die Informationssymbole aufweist und verschieden zu jeder der Basisstationen (BS1-BS3) zugewiesen ist;
Mittel zum Übertragen der doppelt gespreizten Interferenzsymbole zu der Mobilstation (20); und
**gekennzeichnet durch**
Mittel zum intermittierenden Übertragen eines Synchronisierungssignals, welches nur **durch** den Kurzperiodenspreizcode gespreizt ist, von der Vielzahl von Basisstationen (BS1-BS3) zu der Mobilstation (20), mit Übertragungstimings, die untereinander um einen Wert verschoben sind, der auf ein vorbestimmtes Intervall des Systems festgesetzt ist und der Mobilstation im Voraus bekannt ist.

4. CDMA-Kommunikationssystem nach Anspruch 3, wobei mindestens das Intervall zwischen einem Übertragungstiming des Synchronisierungssignals in einem ersten Sektor (SECTOR 1) einer Zelle und dem Übertragungstiming des Synchronisierungssignals in einem zweiten Sektor (SECTOR 2) der Zelle das Gleiche ist wie das Intervall zwischen dem Übertragungstiming des Synchronisierungssignals in dem zweiten Sektor (SECTOR 2) der Zelle und dem Übertragungstiming des Synchronisierungssignals in einem dritten Sektor (SECTOR 3) der Zelle.

5. Basisstation (BS1, BS2, BS3) in einem CDMA-Mobilkommunikationssystem zum Kommunizieren mit einer Mobilstation (20), wobei die Basisstation (BS1, BS2, BS3) **gekennzeichnet ist durch** Umfassen:
Mittel zum Ausführen von Doppelspreizung von Informationssymbolen unter Verwendung eines Kurzperiodenspreizcodes und eines Langperiodenspreizcodes, wobei der Kurzperiodenspreizcode eine Wiederholungsperiode identisch zu einer Periode der Informationssymbole aufweist, und gemeinsam zu all den Basisstationen (BS1-BS3) zugewiesen ist, und der Langperiodenspreizcode eine Wiederholungsperiode länger als die Informationssymbole aufweist und verschieden zu jeder der Basisstationen (BS1-BS3) zugewiesen ist;
Mittel zum Übertragen der doppelt gespreizten Informationssymbole zu der Mobilstation (20); und
**gekennzeichnet durch**
Mittel zum intermittierend Übertragen eines Synchronisierungssignals, welches nur **durch** den Kurzperiodenspreizcode gespreizt ist, von der Basisstation (BS1, BS2, BS3) zu der Mobilstation (20) mit Übertragungstimings, die untereinander verschoben sind um einen Wert, der auf ein vorbestimmtes Intervall des Systems festgesetzt ist und der Mobilstation im Voraus bekannt ist.

6. Basisstation nach Anspruch 5, wobei mindestens das Intervall zwischen dem Übertragungstiming des Synchronisierungssignals in einem ersten Sektor (SECTOR 1) einer Zelle und dem Übertragungstiming des Synchronisierungssignals in einem zweiten Sektor (SECTOR 2) der Zelle das Gleiche ist wie das Intervall zwischen dem Übertragungstiming des Synchronisierungssignals in dem zweiten Sektor (SECTOR 2) der Zelle und dem Übertragungstiming des Synchronisierungssignals in einem dritten Sektor (SECTOR 3) der Zelle.

## Revendications

1. Procédé de transmission de signal de synchronisation dans un système de communications mobiles AMRC incluant au moins une pluralité de stations de base (BS1 - BS3) et une station mobile (20), ledit procédé de transmission de signal de synchronisation étant **caractérisé en ce qu'**il comprend les étapes consistant à :
exécuter un double étalement de symboles d'information en utilisant un code d'étalement de période courte et un code d'étalement de période longue, dans lesquels le code d'étalement de période courte a une période de répétition identique à une période des symboles d'information et est attribué en commun à toutes les stations de base (BS1 - BS3), et le code d'étalement de période longue a une période de répétition plus longue que les symboles d'information et est attribué différemment à chacune desdites stations de base (BS1 - BS3) ;
transmettre les symboles d'information doublement étalés à ladite station mobile (20) ; et
**caractérisé par** l'étape consistant à
transmettre par intermittence un signal de synchronisation, qui est étalé seulement par le code d'étalement de période courte, à partir de ladite pluralité de stations de base (BS1 - BS3) à ladite station mobile (20) avec des minutages de transmission décalés les uns par rapport aux autres d'une quantité qui est fixée à un intervalle prédéterminé du système et qui est connue à l'avance de la station mobile.

2. Procédé de transmission de signal de synchronisation selon la revendication 1, dans lequel au moins l'intervalle entre le minutage de transmission dudit signal de synchronisation dans un premier secteur (SECTEUR 1) d'une cellule et le minutage de transmission dudit signal de synchronisation dans un deuxième secteur (SECTEUR 2) de la cellule est le même que l'intervalle entre le minutage de transmission dudit signal de synchronisation dans le deuxième secteur (SECTEUR 2) de la cellule et le minutage de transmission dudit signal de synchronisation dans un troisième secteur (SECTEUR 3) de la cellule.

3. Système de communications mobiles AMRC incluant au moins une pluralité de stations de base (BS1 - BS3) et une station mobile (20), ledit système de communications mobiles AMRC étant **caractérisé en ce qu'**il comprend :
un moyen pour exécuter un double étalement de symboles d'information en utilisant un code d'étalement de période courte et un code d'étalement de période longue, dans lesquels le code d'étalement de période courte a une période de répétition identique à une période des symboles d'information et est attribué en commun à toutes les stations de base (BS1 - BS3), et le code d'étalement de période longue a une période de répétition plus longue que les symboles d'information et est attribué différemment à chacune desdites stations de base (BS1 - BS3) ;
un moyen pour transmettre les symboles d'information doublement étalés à ladite station mobile (20) ; et
**caractérisé par**
un moyen pour transmettre par intermittence un signal de synchronisation, qui est étalé seulement par le code d'étalement de période courte, à partir de ladite pluralité de stations de base (BS1 - BS3) vers ladite station mobile (20) avec des minutages de transmission décalés les uns par rapport aux autres d'une quantité qui est fixée à un intervalle prédéterminé du système et qui est connue à l'avance de la station mobile.

4. Système de communications mobiles AMRC selon la revendication 3, dans lequel au moins l'intervalle entre un minutage de transmission dudit signal de synchronisation dans un premier secteur (SECTEUR 1) d'une cellule et le minutage de transmission dudit signal de synchronisation dans un deuxième secteur (SECTEUR 2) de la cellule est le même que l'intervalle entre le minutage de transmission dudit signal de synchronisation dans le deuxième secteur (SECTEUR 2) de la cellule et le minutage de transmission dudit signal de synchronisation dans un troisième secteur (SECTEUR 3) de la cellule.

5. Station de base (BS1, BS2, BS3) dans un système de communications mobiles AMRC pour communiquer avec une station mobile (20), ladite station de base (BS1, BS2, BS3) étant **caractérisée en ce qu'**elle comprend :
un moyen pour exécuter un double étalement de symboles d'information en utilisant un code d'étalement de période courte et un code d'étalement de période longue, dans lesquels le code d'étalement de période courte a une période de répétition identique à une période des symboles d'information et est attribué en commun à toutes les stations de base (BS1 - BS3), et le code d'étalement de période longue a une période de répétition plus longue que les symboles d'information et est attribué différemment à chacune desdites stations de base (BS1 - BS3) ;
un moyen pour transmettre les symboles d'information doublement étalés à ladite station mobile (20) ; et
**caractérisée par**
un moyen pour transmettre par intermittence un signal de synchronisation, qui est étalé seulement par le code d'étalement de période courte, à partir de ladite station de base (BS1, BS2, BS3) vers ladite station mobile (20) avec des minutages de transmission décalés les uns par rapport aux autres d'une quantité qui est fixée à un intervalle prédéterminé du système et qui est connue à l'avance de la station mobile.

6. Station de base selon la revendication 5, dans laquelle au moins l'intervalle entre le minutage de transmission dudit signal de synchronisation dans un premier secteur (SECTEUR 1) d'une cellule et le minutage de transmission dudit signal de synchronisation dans un deuxième secteur (SECTEUR 2) de la cellule est le même que l'intervalle entre le minutage de transmission dudit signal de synchronisation dans le deuxième secteur (SECTEUR 2) de la cellule et le minutage de transmission dudit signal de synchronisation dans un troisième secteur (SECTEUR 3) de la cellule.
